# DEMANDE DE BREVET EUROPEEN

(11) **EP 2 876 005 A1**
(43) Date de publication de la demande: **27.05.2015**
(21) Numéro de dépôt: 14193282.2
(22) Date de dépôt: 14.11.2014
(51) Int. Cl.: B60S 1/38

(54) **Elément chauffant pour balai d'essuie-glace d'un véhicule**

(30) Priorité: 21.11.2013 FR 1361491
(71) Demandeur: Valeo Systèmes d'Essuyage, 78321 Le Mesnil Saint Denis (FR)
(72) Inventeur: Caillot, Gérald, 78720 CERNAY LA VILLE (FR); Jarasson, Jean-Michel, 78321 LE MESNIL SAINT DENIS (FR); Izabel, Vincent, 91380 CHILLY MAZARIN (FR)
(74) Mandataire: Callu Danseux, Violaine

(57) **Abrégé**

Elément chauffant pour balai d'essuie-glace d'un véhicule, en particulier automobile, comprenant un circuit (120) d'un conducteur électrique chauffant et un support (118) de ce circuit, le circuit comportant une première boucle (122) dont les extrémités sont reliées à des bornes (126, 128) d'alimentation électrique, caractérisé en ce que le circuit comprend au moins une autre boucle (124) dont les extrémités sont reliées auxdites bornes et dont au moins l'un des paramètres parmi la longueur et la section du conducteur de cette boucle est différent de celui ou de ceux du conducteur de la première boucle.

## Description

### DOMAINE TECHNIQUE

La présente invention concerne un élément chauffant pour balai d'essuie-glace de véhicule, en particulier automobile, un balai d'essuie-glace de véhicule comportant cet élément, ainsi qu'un procédé de chauffage d'un balai d'essuie-glace de véhicule.

### ETAT DE L'ART

Il est connu de chauffer un balai d'essuie-glace de véhicule automobile, en particulier pour le dégivrer en hiver. Dans le cas où ce balai est équipé de canaux internes de circulation de liquide lave-glace, le chauffage du balai permet en outre de chauffer le liquide avant sa pulvérisation sur le pare-brise du véhicule, ce qui facilite le dégivrage du pare-brise et peut éviter ainsi l'utilisation d'une raclette à givre manuelle.

Typiquement, un balai d'essuie-glace du type « balai plat » comprend un corps longitudinal portant une lame d'essuyage, en général en caoutchouc, destinée à frotter contre le pare-brise du véhicule pour évacuer de l'eau en l'amenant en dehors du champ de vision du conducteur. Le balai comporte en outre au moins une vertèbre longitudinale qui confère un cintrage à la lame d'essuyage, de manière à favoriser l'application de cette lame sur le pare-brise. Le balai est porté par un bras qui est entraîné par un moteur dans un mouvement de va-et-vient angulaire. Les moyens de liaison du balai au bras comprennent en général un connecteur qui est solidaire du corps et un adaptateur qui est articulé sur le corps et fixé à une extrémité du bras.

Dans la technique actuelle, les moyens de chauffage d'un balai d'essuie-glace comprennent en général un conducteur électrique chauffant.

On a déjà proposé d'équiper la vertèbre de cintrage d'un balai avec des moyens de chauffage, ces moyens de chauffage se présentant sous la forme d'un film qui est rapporté et collé sur la vertèbre et qui inclut un circuit ou une piste d'un conducteur électrique chauffant. Dans la technique actuelle, le conducteur du circuit forme une boucle dont les extrémités sont reliées à des bornes d'alimentation électrique.

Cependant, cette technologie présente un inconvénient majeur. En effet, dans le cas où le conducteur du circuit se coupe à un endroit, la boucle devient ouverte. Le courant ne peut alors plus passer dans la boucle et les moyens de chauffage ne sont donc plus opérationnels. La seule solution est donc de remplacer le balai par un neuf. Un autre inconvénient de cette technologie est lié au fait que la puissance dissipée par le circuit est sensiblement la même sur toute la longueur du balai alors que la partie haute du balai, c'est-à-dire la partie du balai s'étendant au-delà du bras d'entraînement (lorsque le balai est en position de repos ou de rangement), peut être davantage exposée au froid et devrait donc être davantage chauffée. Il est également envisageable que ce soit la partie basse du balai (en particulier lorsqu'il s'agit d'un balai côté passager) qui soit davantage exposée au froid et doive donc être davantage chauffée.

L'invention propose une solution simple, efficace et économique à ces inconvénients de la technique antérieure.

### EXPOSE DE L'INVENTION

L'invention propose un élément chauffant pour balai d'essuie-glace d'un véhicule, en particulier automobile, comprenant un circuit d'un conducteur électrique chauffant et un support de ce circuit, le circuit comportant une première boucle dont les extrémités sont reliées à des bornes d'alimentation électrique, caractérisé en ce que le circuit comprend au moins une autre boucle dont les extrémités sont reliées auxdites bornes et dont au moins l'un des paramètres parmi la longueur et la section du conducteur de cette boucle est différent de celui ou de ceux du conducteur de la première boucle.

Selon l'invention, le circuit de l'élément chauffant comprend deux boucles indépendantes qui sont alimentées par l'intermédiaire des mêmes bornes électriques. Ainsi, dans le cas où l'une des boucles est défaillante (par exemple à cause d'une coupure de son conducteur), l'autre boucle peut continuer à fonctionner, ce qui est avantageux. Par ailleurs, les boucles de l'élément chauffant sont différentes car leurs conducteurs respectifs ne sont pas les mêmes. Ces conducteurs peuvent différer l'un de l'autre par leur longueur et/ou leur section.

On sait que la résistance d'un conducteur électrique est donnée par la formule : R = p.L/S (dans laquelle p est la résistivité, L la longueur et S la section), et que la puissance dissipée par effet joule est donnée par la formule P = R.I². Ainsi, on peut exprimer cette puissance dissipée par P = ρ.L/S.I². On comprend ainsi que l'augmentation de la longueur d'un conducteur entraîne une augmentation de la puissance dissipée par celui-ci et que l'augmentation de sa section entraîne une diminution de la puissance dissipée.

De préférence, le support du circuit a une forme allongée et comprend une surface longitudinale sensiblement plane. Les bornes peuvent être situées sur cette surface et à distance des extrémités longitudinales du support.

Avantageusement, les bornes sont situées dans une zone médiane du support, qui s'étend par exemple de 30 à 70% (de préférence de 45 à 65%, et plus préférentiellement de 50 à 60%) de sa longueur, mesurée depuis l'une de ses extrémités longitudinales.

De préférence, la première boucle s'étend depuis les bornes vers une des extrémités longitudinales du support, et la seconde boucle s'étend depuis les bornes vers l'extrémité opposée du support.

On comprend ainsi que les boucles s'étendent sur deux parties longitudinales différentes du support (positionnées sensiblement bout à bout) et sont séparées l'une de l'autre par les bornes électriques. Ainsi, une première boucle permet de chauffer une première partie longitudinale du support et la seconde boucle permet de chauffer la seconde partie longitudinale du support. Compte tenu de ce qui précède, on comprend également que les conducteurs des deux boucles sont différents l'un de l'autre et que la puissance dissipée par effet joule dans l'une des parties longitudinales du support sera différente de celle dissipée dans l'autre partie longitudinale du support.

Au moins l'une des boucles peut par exemple avoir une forme générale en U ou en W. Au moins l'une des boucles peut comprendre des ondulations.

Le support de l'élément chauffant est de préférence une vertèbre de cintrage d'un balai d'essuie-glace.

La présente invention concerne également un balai d'essuie-glace pour un véhicule, en particulier automobile, comportant un élément chauffant tel que décrit ci-dessus. De préférence, l'élément chauffant forme une vertèbre de cintrage.

Le balai peut comprendre des moyens de connexion à un bras d'entraînement du balai. Ces moyens de connexion peuvent comporter des moyens de raccordement électrique aux bornes du circuit de l'élément chauffant.

Avantageusement, les moyens de connexion sont situés entre deux parties longitudinales du balai, respectivement haute et basse, la première boucle du circuit de l'élément chauffant s'étendant le long d'une première de ces parties longitudinales et l'autre boucle de ce circuit s'étendant le long de l'autre de ces parties longitudinales.

Le conducteur de la boucle située dans la partie longitudinale basse (ou haute, respectivement) du balai, qui est destinée à s'étendre au moins en partie le long (ou au-delà, respectivement) du bras d'entraînement, est de préférence configuré pour que la puissance dissipée par effet joule dans cette partie basse (ou haute, respectivement) soit inférieure à celle dissipée dans la partie haute (ou basse, respectivement) du balai.

Autrement dit, la partie basse du balai (qui s'étend le long du bras lorsque le balai est en position de repos ou de rangement) est moins chauffée que la partie haute du balai (qui s'étend au-delà du bras). Cette partie haute peut en effet être davantage exposée aux intempéries et au vent et est plus sensible au gel que ne l'est la partie basse du balai qui, elle, est protégée par le bras. En variante, la partie basse du balai (qui s'étend le long du bras lorsque le balai est en position de repos ou de rangement) est plus chauffée que la partie haute du balai (qui s'étend au-delà du bras)

La présente invention concerne également un procédé de chauffage d'un balai d'essuie-glace de véhicule, en particulier automobile, ce balai comprenant deux parties longitudinales disposées sensiblement bout à bout et chauffées respectivement par deux boucles d'un même circuit d'un conducteur électrique chauffant, procédé dans lequel la puissance dissipée par effet joule par l'une de ces boucles est supérieure à celle dissipée par l'autre boucle.

De préférence, la partie longitudinale du balai, dans laquelle la puissance dissipée est la moins importante, est la partie basse (ou haute, respectivement) du balai, c'est-à-dire la partie du balai destinée à s'étendre au moins en partie le long (ou au-delà, respectivement) de son bras d'entraînement.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue en perspective éclatée d'un balai d'essuie-glace de véhicule automobile,
- la figure 2 est une vue schématique d'un élément chauffant selon l'invention, et
- la figure 3 est une vue schématique d'une variante de réalisation d'un élément chauffant selon l'invention.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations haute ou basse s'apprécient par rapport au point de fixation du balai sur le bras porte-balai, la dénomination intérieure correspondant à la partie où le bras et un demi-balai s'étendent.

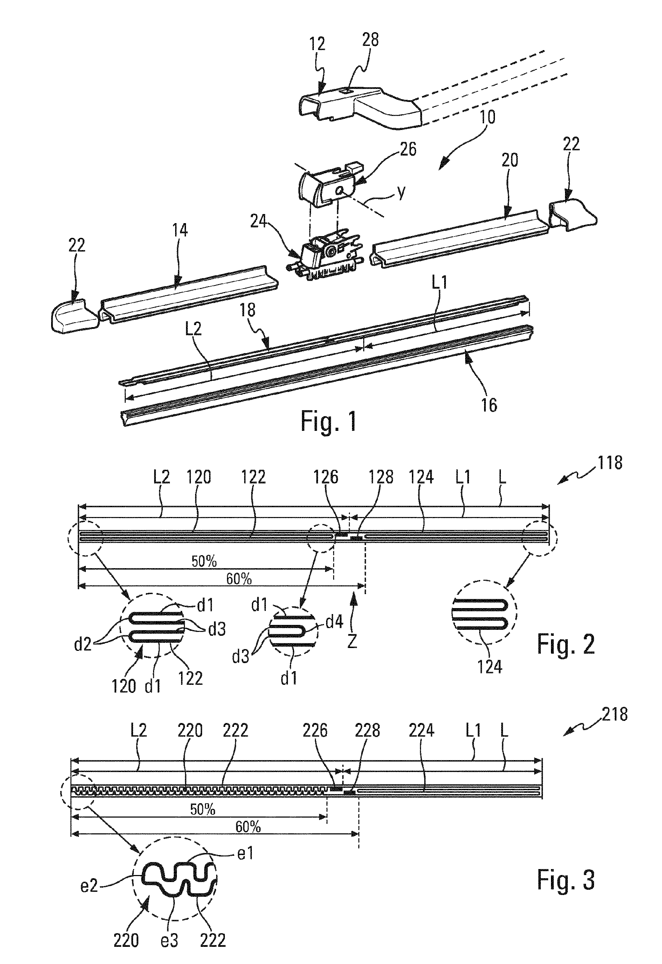

Il est illustré à la figure 1 un balai d'essuie-glace 10 d'un pare-brise de véhicule automobile et un bras 12 d'entraînement de ce balai 10, ce bras 12 étant partiellement représenté et destiné à être entraîné par un moteur pour que le balai suive un mouvement angulaire de va-et-vient permettant d'évacuer l'eau et éventuellement d'autres éléments indésirables recouvrant le pare-brise.

Le balai 10 comprend ici un corps longitudinal 14, une lame d'essuyage 16, en général en caoutchouc, et au moins une vertèbre 18 qui confère un cintrage à la lame 16 de manière à favoriser l'application de cette lame sur le pare-brise.

Le corps 14 du balai 10 comporte un déflecteur supérieur 20 destiné à améliorer le fonctionnement du balai, le but de ce déflecteur 20 étant d'améliorer le plaquage du balai sur le pare-brise et donc la performance aérodynamique du système.

Le balai 10 comprend en outre des embouts ou agrafes d'accrochage 22 de la lame 16 et de la vertèbre 18 sur le corps, ces agrafes 22 étant situées à chacune des extrémités longitudinales du corps 14.

Le corps 14 du balai est ici réalisé en deux parties indépendantes qui sont disposées sensiblement bout à bout et raccordées l'une à l'autre par un connecteur 24 intermédiaire.

Pour assurer son montage sur le bras 12, le balai 10 comprend un adaptateur 26 monté sur le connecteur 24 et permettant une articulation du balai 10 par rapport au bras 12. L'articulation du balai 10 par rapport au bras 12 est une articulation selon un mouvement de rotation autour d'un axe de rotation Y perpendiculaire à l'axe longitudinal du balai 10. Le balai 10 doit en effet présenter au moins un degré de liberté en rotation par rapport au bras 12, et plus spécifiquement par rapport à une pièce terminale 28 du bras 12, pour permettre au balai 10 de suivre la courbure du pare-brise.

L'invention concerne un balai d'essuie-glace du type comportant un élément chauffant, cet élément chauffant comportant un circuit ou une piste d'un conducteur électrique chauffant et un support de ce circuit.

Selon un mode de réalisation de l'invention, le support est une vertèbre de cintrage du balai d'essuie-glace. Typiquement, une vertèbre de cintrage est métallique et a une forme allongée. Une vertèbre a en général en section une forme sensiblement rectangulaire et comprend deux surfaces planes sensiblement parallèles respectivement supérieure et inférieure.

Les figures 2 et 3 représentent deux variantes de réalisation de l'invention. Chacune de ces figures montre une vertèbre 118, 218 dont une des surfaces planes précitées est recouverte d'un circuit 120, 220 d'un conducteur électrique chauffant. Le conducteur des boucles est par exemple en acier inoxydable ou en alliage à base de cuivre, nickel, aluminium, etc. (cupro, laiton, etc.). Selon l'invention, ce circuit 120, 220 comprend au moins deux boucles 122, 124 (figure 2), 222, 224 (figure 3) et deux bornes 126, 128 (figure 2), 226, 228 (figure 3) d'alimentation électrique de ces boucles. Pour cela, les deux extrémités de chaque boucle 122, 124, 222, 224 sont reliées respectivement aux deux bornes 126, 128, 226, 228. Plus précisément, la borne positive 126, 226 est reliée à une première extrémité de chaque boucle 122, 124, 222, 224 et la borne négative 128, 228 est reliée à l'extrémité opposée de chaque boucle.

Comme on le voit sur les figures 2 et 3, la vertèbre 118, 218 a une longueur L et les bornes 126, 128, 226, 228 sont situées à distance des extrémités longitudinales de la vertèbre, et dans une zone Z sensiblement médiane de cette vertèbre. Ces bornes sont ici situées dans une zone Z s'étendant entre 50 et 60% environ de la longueur de la vertèbre, mesurée depuis une extrémité longitudinale de celle-ci (et donc entre 40 et 50% environ, mesurée depuis l'extrémité opposée de la vertèbre).

Cette zone Z peut correspondre à la position du connecteur du balai d'essuie-glace sur la vertèbre 118, 218. En effet, le connecteur peut comprendre des moyens de raccordement électrique destinés à venir au contact des bornes 126, 128, 226, 228 du circuit de la vertèbre en position de montage. En variante, le connecteur peut être centré sur la vertèbre alors que la connexion électrique entre les bornes et les moyens de raccordement est décentrée (pour des questions d'encombrement par exemple).

La boucle 122, 222 s'étend sur une première partie longitudinale de longueur L1 de la vertèbre 118, 228, entre les bornes et l'extrémité libre de cette partie longitudinale. La boucle 124, 224 s'étend sur la seconde partie longitudinale de longueur L2 de la vertèbre 118, 228, entre les bornes et l'extrémité libre de cette partie longitudinale.

Les boucles 122, 124 et 224 ont ici une forme en W et comprennent deux lignes droites d1 longeant respectivement les bords longitudinaux de la vertèbre, parallèlement à ceux-ci, ces lignes d1 comportant des premières extrémités qui sont reliées respectivement aux bornes 126, 128, 226, 228, et des extrémités opposées d2 qui sont coudées et reliées respectivement à des premières extrémités de deux lignes droites d3 s'étendant entre les lignes droites d1 précitées. Les extrémités opposées d4 de ces lignes droites d3 sont reliées entre elles et forment sensiblement un U.

On constate en figure 3 que la boucle 222 a une forme différente et comprend des ondulations. Plus précisément, la boucle 222 comprend une première ligne ondulée e1 qui longe un bord longitudinal de la vertèbre et dont une extrémité est reliée à la borne 226, l'extrémité opposée e2 de cette ligne e1 étant coudée et reliée respectivement à une première extrémité d'une autre ligne ondulée e3 qui longe l'autre bord longitudinal de la vertèbre et dont l'extrémité opposée est reliée à la borne 228.

En variante, les boucles pourraient comprendre une multitude de lignes droites et parallèles de conducteur, qui seraient reliées entre elles en série. Chaque boucle pourrait par exemple être du type WWW, comportant plusieurs parties successives en W.

Selon une autre caractéristique de l'invention, les boucles de la vertèbre 118, 218 sont différentes et sont configurées pour que les puissances dissipées dans les deux parties longitudinales de la vertèbre soient différentes. Pour cela, au moins l'un des paramètres parmi la longueur et la section du conducteur de la boucle 122, 222 est différent de celui ou de ceux du conducteur de l'autre boucle 124, 224.

Dans l'exemple de la figure 2, la longueur du conducteur de la boucle 124 est plus petite que celle du conducteur de la boucle 122 et la section du conducteur de la boucle 124 est plus petite que celle du conducteur de la boucle 122 (cette dernière caractéristique étant schématiquement représentée en figure 2 par une boucle 124 dont les traits représentant le conducteur sont plus fins que ceux de la boucle 122).

Dans l'exemple de la figure 3, la longueur du conducteur de la boucle 224 est plus petite que celle du conducteur de la boucle 222 et la section du conducteur de la boucle 224 est plus petite que celle du conducteur de la boucle 122.

Dans le cas où le conducteur a en section une forme circulaire, la section de ce conducteur peut être modifiée en faisant varier son diamètre. Dans le cas où le conducteur a en section une forme plane sensiblement rectangulaire, la section de ce conducteur peut être modifiée en faisant varier sa largeur et/ou sa hauteur (ou son épaisseur, qui est par exemple de quelques dixièmes).

Comme expliqué dans ce qui précède, on sait que la puissance dissipée par effet joule par un conducteur électrique est proportionnelle à sa longueur et inversement proportionnelle à sa section. Les boucles 122 et 222 des vertèbres 118, 228 sont ici configurées pour qu'elles dissipent une puissance supérieure à celle dissipée par les boucles 124 et 224.

Pour que la puissance dissipée dans une première partie longitudinale d'une vertèbre soit supérieure à celle dissipée dans la seconde partie longitudinale de cette vertèbre, il faut donc :
- pour le cas où les parties longitudinales sont sensiblement de même longueur (zone Z centrée), que (i) la longueur du conducteur dans la première partie soit supérieure à celle dans la seconde partie (par le biais d'ondulations par exemple comme en figure 3, ou d'une pluralité de lignes de conducteur parallèles comme décrit plus haut), si ces conducteurs sont sensiblement de mêmes type et section, ou (ii) la section du conducteur de la première partie soit inférieure à celle de la seconde partie, si ces conducteurs sont de mêmes type et longueur ;
- pour le cas où l'une des parties a une longueur supérieure à l'autre partie (zone Z décentrée), optimiser les paramètres de section et de longueur des conducteurs de ces parties pour atteindre le but recherché.

Selon un mode préféré de réalisation d'un balai d'essuie-glace selon l'invention, la partie longitudinale de longueur L1 de la vertèbre, c'est-à-dire la partie longitudinale de la vertèbre comportant la boucle 124, 224 destinée à dissiper la puissance la plus faible, est celle qui est destinée à s'étendre au voisinage du bras d'entraînement du balai lorsque ce dernier est en position de repos ou de rangement. Cette partie de longueur L1 de la vertèbre fait partie de la partie basse du balai. Cette position relative entre la partie de longueur L1 de la vertèbre et le bras d'entraînement du balai est représentée schématiquement en figure 1 où la partie du bras 12 s'étendant le long de la partie de la vertèbre 18 de longueur L1 en position de repos, est schématiquement représentée par des traits pointillés.

Ainsi, c'est dans la partie haute du balai que s'étend la boucle 122, 222 qui est destinée à dissiper la plus forte puissance. Ceci est particulièrement avantageux car cette partie haute est la partie du balai la plus exposée au froid et aux intempéries en utilisation du fait que la partie basse du balai est davantage protégée du froid et des intempéries par le bras.

En variante, c'est dans la partie basse du balai que la puissance dissipée est destinée à être la plus importante.

## Revendications

1. Elément chauffant pour balai d'essuie-glace d'un véhicule, en particulier automobile, comprenant un circuit (120, 220) d'un conducteur électrique chauffant et un support (118, 218) de ce circuit, le circuit comportant une première boucle (122, 222) dont les extrémités sont reliées à des bornes (126, 128, 226, 228) d'alimentation électrique, **caractérisé en ce que** le circuit comprend au moins une autre boucle (124, 224) dont les extrémités sont reliées auxdites bornes et dont au moins l'un des paramètres parmi la longueur et la section du conducteur de cette boucle est différent de celui ou de ceux du conducteur de la première boucle.

2. Elément chauffant selon la revendication 1, **caractérisé en ce que** le support (118, 218) a une forme allongée et comprend une surface longitudinale sensiblement plane, lesdites bornes (126, 128, 226, 228) étant situées sur cette surface et à distance des extrémités longitudinales du support.

3. Elément chauffant selon la revendication 2, **caractérisé en ce que** les bornes (126, 128, 226, 228) sont situées dans une zone (Z) sensiblement médiane du support, qui s'étend par exemple de 30 à 70% de sa longueur, mesurée depuis l'une de ses extrémités longitudinales.

4. Elément chauffant selon la revendication 2 ou 3, **caractérisé en ce que** la première boucle (122, 222) s'étend depuis les bornes (126, 128, 226, 228) vers une des extrémités longitudinales du support (118, 218), et la seconde boucle (124, 224) s'étend depuis les bornes vers l'extrémité opposée du support.

5. Elément chauffant selon l'une des revendications précédentes, **caractérisé en ce qu'**au moins l'une des boucles (122, 124, 222, 224) a une forme générale en U ou en W.

6. Elément chauffant selon l'une des revendications précédentes, **caractérisé en ce qu'**au moins l'une des boucles (122, 124, 222, 224) comprend des ondulations.

7. Elément chauffant selon l'une des revendications précédentes, **caractérisé en ce que** le support est une vertèbre de cintrage (118, 218) du balai d'essuie-glace.

8. Balai d'essuie-glace pour un véhicule, en particulier automobile, comportant un élément chauffant selon l'une des revendications précédentes.

9. Balai d'essuie-glace selon la revendication 8, **caractérisé en ce que** l'élément chauffant forme une vertèbre de cintrage (118, 218).

10. Balai d'essuie-glace selon la revendication 8 ou 9, **caractérisé en ce qu'**il comprend des moyens de connexion à un bras d'entraînement du balai, ces moyens de connexion comportant des moyens de raccordement électrique aux bornes (126, 128, 226, 228) du circuit (120, 220) de l'élément chauffant.

11. Balai d'essuie-glace selon la revendication 10, **caractérisé en ce que** les moyens de connexion sont situés entre deux parties longitudinales du balai, respectivement haute et basse, la première boucle (122, 222) du circuit (120, 220) de l'élément chauffant s'étendant le long d'une première de ces parties longitudinales et l'autre boucle (124, 224) de ce circuit s'étendant le long de l'autre de ces parties longitudinales.

12. Balai d'essuie-glace selon la revendication 11, **caractérisé en ce que** le conducteur de la boucle (124, 224) située dans la partie longitudinale basse (ou haute, respectivement) du balai, qui est destinée à s'étendre au moins en partie le long (ou au-delà, respectivement) du bras d'entraînement, est configuré pour que la puissance dissipée par effet joule dans cette partie basse (ou haute, respectivement) soit inférieure à celle dissipée dans la partie haute (ou basse, respectivement) du balai.

13. Procédé de chauffage d'un balai d'essuie-glace de véhicule, en particulier automobile, ce balai comprenant deux parties longitudinales disposées sensiblement bout à bout et chauffées respectivement par deux boucles (122, 124, 222, 224) d'un même circuit (120, 220) d'un conducteur électrique chauffant, procédé dans lequel la puissance dissipée par effet joule par l'une de ces boucles est supérieure à celle dissipée par l'autre boucle.

14. Procédé selon la revendication 13, **caractérisé en ce que** la partie longitudinale du balai, dans laquelle la puissance dissipée est la moins importante, est la partie basse (ou haute, respectivement) du balai, c'est-à-dire la partie du balai destinée à s'étendre au moins en partie le long (ou au-delà, respectivement) de son bras d'entraînement.
